## Europäisches Patentamt
## European Patent Office
## Office européen des brevets

(11) Veröffentlichungsnummer: **0 211 911**
**B1**

(12) **EUROPÄISCHE PATENTSCHRIFT**

(45) Veröffentlichungstag der Patentschrift:
18.10.89

(51) Int. Cl.⁴: **A 01 M 29/02, B 06 B 1/02**

(21) Anmeldenummer: 86901365.6

(22) Anmeldetag: 11.01.86

(86) Internationale Anmeldenummer:
PCT/EP 86/00009

(87) Internationale Veröffentlichungsnummer:
WO 86/04485 (14.08.86 Gazette 86/18)

(54) **VERFAHREN UND VORRICHTUNG ZUR VOGELVERGRÄMUNG.**

(30) Priorität: 08.02.85 DE 3504272

(43) Veröffentlichungstag der Anmeldung:
04.03.87 Patentblatt 87/10

(45) Bekanntmachung des Hinweises auf die Patenterteilung:
18.10.89 Patentblatt 89/42

(84) Benannte Vertragsstaaten:
AT BE CH DE FR GB IT LI LU NL SE

(56) Entgegenhaltungen:
WO-A-85/02319
DE-A- 2 022 056
DE-B- 1 260 855
GB-A- 1 228 405
JP-A-58 141 742
US-A- 4 105 992
US-A- 4 219 884
US-A- 4 285 845

(73) Patentinhaber: Battelle-Institut e.V., Am Römerhof 35 Postfach 900 160,
D-6000 Frankfurt/Main 90 (DE)

(72) Erfinder: BEUTER, Karl, Oberlindau 98, D-6000 Frankfurt am Main (DE)
Erfinder: WEISS, Rainer, Mainzer Landstrasse 61, D-6234 Hattersheim (DE)

(74) Vertreter: Sartorius, Peter, Dipl.-Ing., Battelle-Institut e.V. Abteilung Patente Am Römerhof 35, D-6000 Frankfurt am Main 90 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren und eine Vorrichtung zur Vogelvergrämung durch diskontinuierliche Aussendung von akustischen, frequenzmodulierten Signalen begrenzter zeitlicher Dauer.

Aus der DE-Patentschrift 1 260 855 ist ein elektronisches Gerät zur Nachbildung von tierischen Scheuch-, Warn- oder Lockrufen bekannt. Die Tierlaute werden dabei synthetisch aus dem Frequenzspektrum von impulsgesteuerten Tongeneratoren gewonnen. Die Häufigkeit in der Wiederholung dieser Tierlaute wird durch Impulse von Taktgebern gesteuert. Durch elektronische Konzeption des Gerätes können verschiedene Tierlaute programmiert werden, so daß eine Gewöhnung der Tiere an ein und denselben Laut vermieden wird. Ferner wird in der DE-OS 2 022 056 ein Verfahren zum Verjagen von Ratten und Mäusen beschrieben. Hierfür wird die Stelle, wo sich die Schädlinge aufhalten, mit Ultraschall vom bestimmten Pegel beschallt, der innerhalb eines vorgegebenen Ultraschall-Frequenzbereiches periodisch frequenzmoduliert wird. All die bekannten Methoden sind jedoch zum Schutz von landwirtschaftlichen Anbaugebieten, wie Obstplantagen und Getreidefeldern, von Fischzuchtteichen oder von Mülldeponien und Flugplätzen, zum Zwecke der Abschreckung von Vögeln, insbesondere von Staren, Möwen und Fischreihern nicht geeignet. An die in üblicher Weise frequenz- und/oder amplitudenmodulierten akustischen Signalen im hörbaren Bereich gewöhnen sich die Vögel nach relativ kurzer Zeit, so daß ein sinnvolles Einsetzen solcher Geräte nicht mehr gewährleistet ist. Die Vorrichtungen mit Ultraschallsignalen haben keine Wirkung zur dauerhaften Vogelvergrämung.

Ferner ist ein Verfahren und eine Vorrichtung zur Vogelvergrämung durch diskontinuierliche Aussendung von akustischen, frequenzmodulierten Signalen bekannt (GB-A 1 228 405). Das ausgesendete Signal hat eine Trägerfrequenz zwischen 500 und 5000 Hz. Dieses Signal wird dann amplitudenmoduliert und zwar in einem Frequenzbereich zwischen 50 und 300 Hz. Diese Art der Modulation hat den Nachteil, daß sich nur eine unbefriedigende Simulation artspezifischer Signale ergibt und ist somit zur Vogelvergrämung ungeeignet. Diese Aufgabe ist durch die im kennzeichnenden Teil des Anspruches 1 aufgeführten Merkmale gelöst.

Der vorliegenden Erfindung liegt daher die Aufgabe zugrunde, eine Methode zu entwickeln, mit der eine effektive Vogelvergrämung über unbestimmt lange Zeit möglich ist. Das zu realisierende Vogelvergrämungsgerät sollte netzunabhängig sein, geringeren Stromverbrauch aufweisen und einen einfachen und kostengünstigen Aufbau besitzen. Darüber hinaus sollte die Vorrichtung an verschiedene Vogelarten anpaßbar sein.

Die erfindungsgemäße Vorrichtung zur Vogelvergrämung weist eine Ablaufsteuerung auf, mit der die Dauer und/oder die Folge auszusendender Signale festlegbar ist und welche eine Signalgenerierungseinheit mit Frequenzmodulationseinrichtung steuert. Erst durch die Frequenzmodulation des frequenzmodulierten Signals erhält man zur Vogelvergrämung geeignete artspezifische Signale. Die nachfolgenden Unteransprüche beschreiben bevorzugte Ausführungsformen der erfindungsgemäßen Vorrichtung.

Es wurde festgestellt, daß in üblicher Weise frequenzmodulierte hörbare akustische Signale zur Abschreckung von Vögeln nicht geeignet sind, auch wenn diese als eine Folge von verschieden modulierten Signalen abgestrahlt werden. Die Vögel gewöhnen sich nach relativ kurzer Zeit an diese Laute bzw. an deren Sendefolge, so daß ein Vergrämungseffekt nicht mehr erzielbar ist. Nach dem erfindungsgemäßen Verfahren werden jedoch Signale erzeugt, die innerhalb eines bestimmten Frequenzbereiches moduliert sind und eine bestimmte Modulationsperiode aufweisen. Es zeigt sich, daß mit einer festen oder auch willkürlichen Abstrahlfolge solcher Signale überraschenderweise eine Eingewöhnung nicht auftritt. Wesentlich ist, daß mehr als zwei, z.B. 16 bis 32 solche Signale generiert werden, die sich jeweils in drei ihrer Parameter und zwar in dem Frequenzmodulationsbereich, in der Modulationsperiode und/oder in der zeitlichen Dauer unterscheiden. Hierdurch ist eine Mehrzahl von Variationsmöglichkeiten gegeben. Darüber hinaus kann auch die Zeitspanne zwischen zwei aufeinanderfolgenden Signalen beliebig variiert werden. Die Pause zwischen den einzelnen Signalen kann erfindungsgemäß 20 Sekunden bis 1 Stunde betragen, vorzugsweise 1 bis 30 Minuten, insbesondere 5 bis 20 Minuten. Jedes Signal sollte vorzugsweise zwischen 100 und 7000 Hz, insbesondere zwischen 150 und 5000 Hz frequenzmoduliert werden. Die Modulationsperiode liegt zwischen etwa 0,01 bis 5 Sekunden, vorzugsweise 0,02 bis 2 Sekunden, insbesondere 0,05 bis 1 Sekunde. Besondere Ergebnisse werden erzielt, wenn der Bereich, innerhalb dessen die Frequenzmodulation erfolgt, mindestens 2000 Hz umfaßt. Die untere Grenze für den Frequenzmodulationsbereich sollte jedoch vorzugsweise zwischen 1000 und 100 Hz, insbesondere zwischen 500 und 100 Hz liegen. Die Dauer jedes einzelnen Signals beträgt 1 bis 30 Sekunden, vorzugsweise 10 bis 15 Sekunden. Durch die erfindungsgemäßen Maßnahmen ist ein Schalldruckpegel am Einwirkungsort von etwa 60 dB ausreichend. Dies ermöglicht auch einen dauerhaften Betrieb der erfindungsgemäßen Vorrichtung, ohne daß eine Geräuschbelastung der Anwohner gegeben ist.

Die erfindungsgemäße Konzeption der Vorrichtung zur Durchführung eines solchen Verfahrens erfüllt die durch die besondere Art des Einsatzes bedingten Anforderungen. Sie ist netzunabhängig und hat einen geringen Stromverbrauch. Sie kann automatisch und manuell ausgelöst werden, hat eine einfache Schaltung und ist kostengünstig realisierbar.

Die Erfindung wird anhand der folgenden Beschreibung sowie der schematischen Zeichnung näher erläutert. Es zeigen:

Fig. 1 die Gesamtkonzeption einer Ausführungsform der erfindungsgemäßen Vorrichtung;

Fig. 2 den erfindungsgemäßen modulierten Frequenzbereich und die Modulationsperiode;

Fig. 3 eine Ausführungsform für die schaltungsgemäße Realisierung der Ablaufsteuerung und

Fig. 4 eine Ausführungsform für die schaltungsmäßige Realisierung der Signalgenerierung.

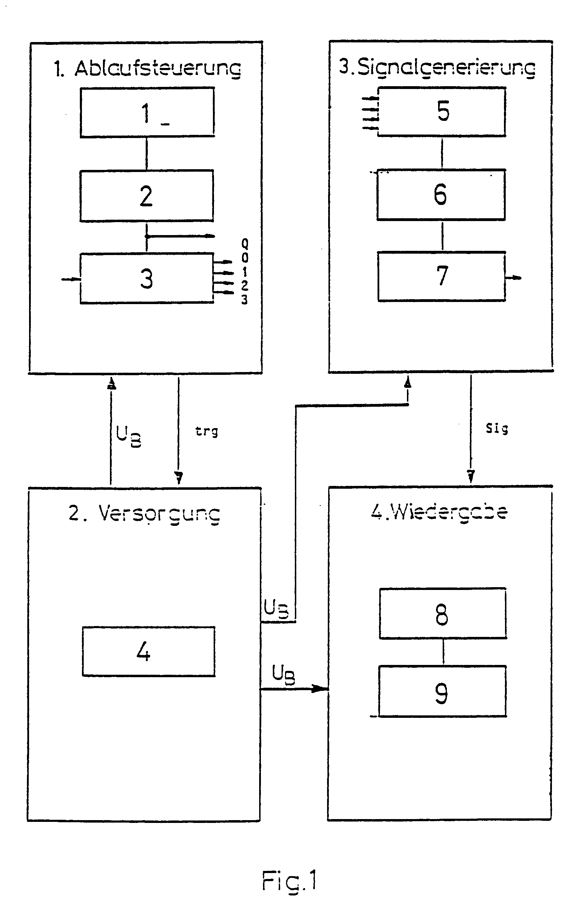

In Fig. 1 wird die Gesamtkonzeption der erfindungsgemäßen Vorrichtung gezeigt, die im wesentlichen aus vier Einheiten besteht; Ablaufsteuerung, Signalgenerierung, Stromversorgung und Wiedergabeeinheit.

Die Ablaufsteuerung kann aus dem Auslöser 1, dem Zeitgeber 2 und dem Zähler 3 bestehen. Sie kann aber auch durch einen Mikroprozessor erfolgen. Diese Steuerungseinheit steht in Verbindung mit der Versorgungseinheit mit einem Akkumulator 4. Die Signalgenerierung besteht im wesentlichen aus dem Analogumschalter 5, dem Modulationsgenerator 6 und dem Hauptgenerator 7. Die Wiedergabe wird durch einen Leistungsverstärker 8 und einen Lautsprecher 9 gewährleistet.

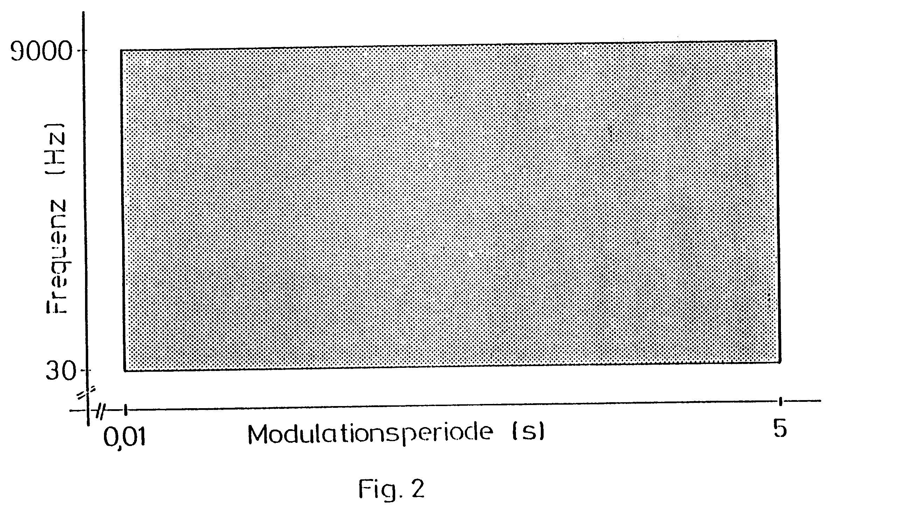

Erfindungsgemäß wird das abgestrahlte Signal innerhalb eines bestimmten Frequenzbereiches und mit einer bestimmten Periode moduliert, wie es in Fig. 2 dargestellt ist. Der zur Vogelabschreckung angewandte modulierte Frequenzbereich liegt zwischen 30 und 9000 Hz bei einer Modulationsperiode von z.B. 0,01 bis 5 Sekunden. Wie bereits erläutert, kann das Signal innerhalb dieses Bereiches an beliebiger Stelle liegen, vorausgesetzt, daß die genannten Bedingungen erfüllt sind.

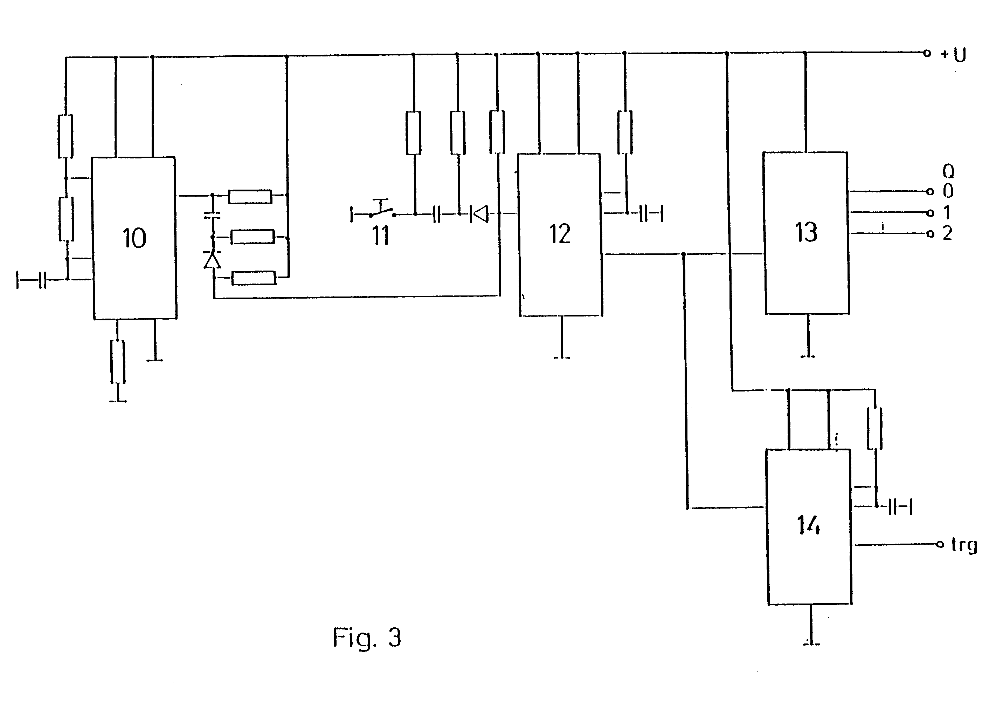

Die erfindungsgemäße Ablaufsteuerung besteht, wie in Fig. 3 dargestellt, im wesentlichen aus einem automatischen Auslöser und/oder einem manuellen Auslöser. Der Auslöser 10 in Multivibrator-Schaltung erzeugt z.B. alle 10 Minuten ein Triggersignal. Dieses Triggersignal startet einen monostabilen Multivibrator 12. Die abfallende Flanke des vom monostabilen Multivibrator 12 erzeugten Pulses schaltet den Zähler 13 ein Bit weiter und löst gleichzeitig einen weiteren monostabilen Multivibrator 14 aus. Dieser schaltet über ein hier nicht gezeigtes Relais die Versorgungsspannung für die Signalgenerierung und Wiedergabe für eine bestimmte, variierbare Zeitdauer, z.B. 10 Sekunden sein. Dieser Vorgang wiederholt sich nach diesem Beispiel jede 10 Minuten, wenn der manuelle Auslöser 11 zwischendurch nicht betätigt wird. In dieser Ausführungsform ist der Zähler 13 für 8 Signale realisiert, die jeweils beim Weiterschalten um 1 Bit generiert werden können.

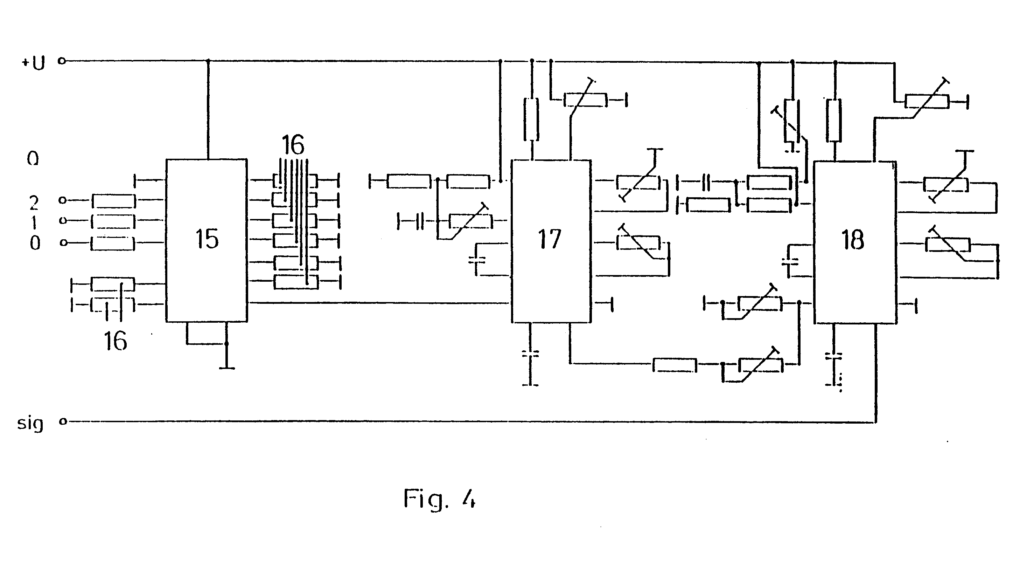

Je nach Stellung des Zählers 13 wird z.B. über einen in Fig. 4 gezeigten 8-Kanal-Analogumschalter 15 der entsprechende frequenzbestimmte Widerstand 16 an den Modulationsgenerator 17 gestaltet, womit die jeweilige Modulationsfrequenz eingestellt wird. Die Modulationsfrequenz kann somit automatisch in fester Folge verändert werden. Der Modulationsgrad und Frequenz des Hauptgenerators 18 werden mittels Beschaltung der Generatorbausteine 17 und 18 festgelegt. Das Generatorsignal wird anschließend verstärkt und über einen Lautsprecher abgestrahlt.

Für eine variable Signalfolge wird der Zeitgeber 12 in Fig. 3 als monostabiler Multivibrator mit einstellbarer Pulsdauer betrieben. Zur Ansteuerung kann ein tiefpassgefiltertes und verstärktes Signal eines hier nicht gezeigten astabilen Multivibrators dienen.

Während der Pulsdauer läuft der Zähler 13 mit der Frequenz eines Taktgenerators und stoppt beim Abschalten des Zeitgebers 12. Der 8-Kanal-Analogumschalter 15 in Fig. 4 setzt den entsprechenden frequenzbestimmenden Widerstand 16. Dadurch wird erreicht, daß die Modulationsfrequenz automatisch und ohne feste Folge eingestellt wird.

Anstelle des Analogumschalters 15 und des Modulationsgenerators 17 kann auch ein Speicher eingesetzt werden, in dem alle Modulationstypen bzw. -frequenzen abgelegt sind. In diesem Fall müssen in der Ablaufsteuerung entsprechende Bausteine vorgesehen sein, die das Auslesen des Speicherinhalts ermöglichen.

**Patentansprüche**

1. Verfahren zur Vogelvergrämung durch diskontinuierliche Aussendung von akustischen, frequenzmodulierten Signalen begrenzter zeitlicher Dauer, dadurch gekennzeichnet, daß mindestens zwei Signale erzeugt werden, deren Frequenz periodisch innerhalb eines Bereiches von etwa 500 bis etwa 5000 Hz moduliert ist, wobei die Modulationsperiode zwischen etwa 0,01 bis etwa 5 Sekunden beträgt, und die sich voneinander in dem Frequenzmodulationsbereich, in der Modulationsperiode und/oder in der zeitlichen Dauer unterscheiden und daß die einzelnen Signale in festgelegter oder willkürlicher Folge abgestrahlt werden.

2. Verfahren nach Anspruch 1, dadurch gekennzeichnet, daß die Frequenz jedes einzelnen Signals innerhalb eines Bereiches von 100 bis 7000 Hz, vorzugsweise innerhalb eines Bereiches von 150 bis 5000 Hz moduliert wird.

3. Verfahren nach Anspruch 1 oder 2, dadurch gekennzeichnet, daß die Modulationsperiode 0,02 bis 2, vorzugsweise 0,05 bis 1 Sekunde beträgt.

4. Verfahren nach einem der Ansprüche 1 bis 3, dadurch gekennzeichnet, daß die Modulationsspanne zwischen der unteren und oberen Frequenz mindestens 2000 Hz umfaßt.

5. Verfahren nach einem der Ansprüche 1 bis 4, dadurch gekennzeichnet, daß die untere Grenze für den Frequenzmodulationsbereich zwischen 1000 und 100 Hz, vorzugsweise zwischen 500 und 100 Hz liegt.

6. Verfahren nach einem der Ansprüche 1 bis 5, dadurch gekennzeichnet, daß die Dauer jedes einzelnen Signals zwischen 1 bis 30 Sekunden, vorzugsweise 10 bis 15 Sekunden beträgt.

7. Verfahren nach einem der Ansprüche 1 bis 6, dadurch gekennzeichnet, daß die Zeitspanne zwischen zwei aufeinanderfolgenden Signalen 20 Sekunden bis 1 Stunde, vorzugsweise 1 bis 30 Minuten, insbesondere 10 bis 20 Minuten beträgt.

8. Vorrichtung zur Vogelvergrämung zur Durchführung des Verfahrens nach einem der Ansprüche 1 bis 7, mit Einrichtungen zur Erzeugung und Aussendung akustischer, frequenzmodulierter Signale begrenzter zeitlicher Dauer, dadurch gekennzeichnet, daß eine Ablaufsteuerung (1, 2, 3 und 10, 12, 13) vorgesehen ist, mit der die Dauer und/oder die Folge von auszusendenden Signalen festlegbar ist und die die in der Erzeugungseinrichtung enthaltenen Signalgenerierungseinheit und Frequenzmodulationseinrichtung (6, 7 und 17, 18) steuert und das Signal mittels einer Wiedergabeeinheit (8, 9) abgestrahlt wird.

9. Vorrichtung nach Anspruch 8, dadurch gekennzeichnet, daß in der Ablaufsteuerung ein automatischer Auslöser (10) vorgesehen ist, durch den jeweils nach einer bestimmten Zeitdauer ein Triggersignal erzeugbar ist, das einen Zeitgeber (12) startet, mit dem die Versorgungsspannung für die Signalgenerierung und -wiedergabe einschaltbar ist und der mit einem Zähler (13) verbunden ist, der in Verbindung mit einem Analogumschalter (15) die entsprechende Frequenz einstellt.

10. Vorrichtung nach Anspruch 9, dadurch gekennzeichnet, daß der durch die abfallende oder ansteigende Flanke des vom Zeitgeber (12) erzeugten Pulses jeweils um 1 Bit weiterschaltbar ist und daß je nach Stellung des Zählers (13) der entsprechende Widerstand (16) zur Festlegung der Modulationsfrequenz einschaltbar ist.

11. Vorrichtung nach einem der Ansprüche 8 bis 10, dadurch gekennzeichnet, daß zur Erzeugung von Vergrämungssignalen willkürlicher Folge der Zähler (13) mit der Frequenz eines Taktgenerators läuft und beim Abschalten des Zeitgebers (12) stoppt.

12. Vorrichtung nach einem der Ansprüche 8 bis 11, dadurch gekennzeichnet, daß durch die Ablaufsteuerung die Zeitspanne zwischen zwei aufeinanderfolgenden Signalen festlegbar ist.

**Claims**

1. Method for scaring off of birds by means of the intermittent emission of acoustic frequency modulated signals of a limited duration distinguished by the fact that at least two signals are generated, the frequency of which is periodically modulated within a range from approx. 500 to approx. 5000 Hz, the modulation period being between approx. 0.01 and approx. 5 seconds, such signals differing from one another in their frequency modulation range, modulation period and/or duration, and by the fact that the individual signals are emitted in a predetermined or in a random sequence.

2. Method in accordance with Claim 1, distinguished by the fact that the frequency of each individual signal is modulated within a range from 100 to 7000 Hz, and preferably within a range from 150 to 5000 Hz.

3. Method in accordance with Claim 1 or 2, distinguished by the fact that the modulation period is 0.02 to 2 seconds, preferably 0.05 to 1 second.

4. Method in accordance with one of Claims 1 to 3, distinguished by the fact that the modulation interval between the upper and lower frequency comprises at least 2000 Hz.

5. Method in accordance with one of Claims 1 to 4, distinguished by the fact that the lower limit for the frequency modulation range is between 1000 and 100 Hz preferably between 500 and 100 Hz.

6. Method in accordance with one of Claims 1 to 5, distinguished by the fact that the duration of each individual signal is between 1 and 30 seconds, preferably 10 to 15 seconds.

7. Method in accordance with one of Claims 1 to 6, distinguished by the fact that the time interval between two sequential signals is 20 seconds to 1 hours, preferably 1 to 30 minutes, most especially 10 to 20 minutes.

8. System for scaring off of birds for implementation of the method in accordance with one of Claims 1 to 7, comprising equipment for the generation and emission of frequency-modulated acoutic signals of a limited duration distinguished by the fact that a sequence control system (1, 2, 3 and 10, 12, 13) is included, by means of which the duration and/or the sequence of signals to be emitted can be selected and by means of which the signal generation unit and frequency modulation system (6, 7 and 17, 18) contained in the generation unit are controlled and the signal emitted by means of a play-back unit (8, 9).

9. System in accordance with Claim 8, distinguished by the fact that the sequence control system features an automatic trip mechanism (10) which after a certain interval in each cycle can generate a trigger signal which starts a timer (12) by means of which the power supply for signal generation and emission can be switched on and which is connected to a counter (13) which in conjunction with an analog transfer switch (15) selects the appropriate frequency.

10. System in accordance with Claim 9, distinguished by the fact that the counter (13) which is advanced by one Bit in each case by the falling or rising edge of the pulse generated by timer (12) and by the fact that the corresponding resistance (16) for stipulation of modulation frequency can be switched in according to the position of the counter (13).

11. System in accordance with one of Claims 8 to 10, distinguished by the fact that for the generation of bird-scaring signals of a random sequence the counter (13) runs at the frequency of a clock-pulse generator and stops when the timer (12) is switched off.

12. System in accordance with one of Claims 8 to 11, distinguished by the fact that the sequence control system can be used to stipulate the time interval between two successive signals.

**Revendications**

1. Procédé pour effrayer les oiseaux, par émission discontinue de signaux acoustiques modulés en fréquence et d'une durée limitée dans le temps, procédé caractérisé en ce qu'il est émis au moins deux signaux dont la fréquence est modulée périodiquement à l'intérieur d'une zone d'environ 500 à environ 5000 Hz, la période de modulation se situant entre à peu près 0,01 et à peu près 5 secondes, ces signaux se différenciant les uns des autres selon le domaine de modulation de fréquence, selon la période de modulation et/ou selon leur durée, et les signaux individuels étant émis selon une succession fixe ou arbitraire.

2. Procédé selon la revendication 1, caractérisé en ce que la fréquence de chaque signal individuel est modulée à l'intérieur d'une zone de 100 à 7000 Hz, de préférence à l'intérieur d'une zone de 150 à 5000 Hz.

3. Procédé selon la revendication 1 ou 2, caractérisé en ce que la période de modulation est de 0,02 à 2 secondes, de préférence de 0,05 à 1 seconde.

4. Procédé selon une des revendications 1 à 3, caractérisé en ce que l'écart de modulation entre la fréquence la plus basse et la fréquence la plus haute, est d'au moins 2000 Hz.

5. Procédé selon une des revendications 1 à 4, caractérisé en ce que la limite inférieure pour la zone de modulation de fréquence se situe entre 1000 et 100 Hz, de préférence entre 500 et 100 Hz.

6. Procédé selon une des revendications 1 à 5, caractérisé en ce que la durée de chaque signal individuel est comprise entre 1 et 30 secondes, de préférence entre 10 et 15 secondes.

7. Procédé selon une des revendications 1 à 6, caractérisé en ce que l'intervalle de temps entre deux signaux successifs est de 20 secondes à 1 heure, de préférence de 1 à 30 minutes, notamment de 10 à 20 minutes.

8. Dispositif pour effrayer les oiseaux prévu pour la mise en oeuvre du procédé selon une des revendications 1 à 7, avec des dispositifs pour produire et émettre des signaux acoustiques modulés en fréquence d'une durée limitée dans le temps, dispositif caractérisé en ce qu'il est prévu une commande séquentielle (1, 2, 3 et 10, 12, 13), grâce à laquelle la durée et/ou la succession des signaux à émettre est susceptible d'être déterminée, cette commande séquentielle contrôlant l'unité de génération de signaux contenus dans le dispositif de production de signaux, ainsi que le dispositif de modulation de fréquence (6, 7 et 17, 18), et le signal étant émis par une unité de reproduction (8, 9).

9. Dispositif selon la revendication 8, caractérisé en ce qu'il est prévu dans la commande séquentielle, un déclencheur automatique (10), grâce auquel un signal de déclenchement est respectivement susceptible d'être produit après une période de temps déterminée, ce signal démarrant une horloge (12), avec laquelle la tension d'alimentation pour la génération des signaux et pour la reproduction, est susceptible d'être enclenchée, et ce signal étant appliqué à un compteur (13) qui règle en liaison avec un commutateur analogique (15) la fréquence correspondante.

10. Dispositif selon la revendication 9, caractérisé en ce que le compteur (13) est susceptible d'être respectivement commuté d'un chiffre binaire supplémentaire par le flanc descendant ou bien par le flanc montant de l'impulsion produite par l'horloge (12), et selon la position de ce compteur (13), la résistance correspondante (16) est susceptible d'être mise en circuit pour déterminer la fréquence de modulation.

11. Dispositif selon une des revendications 8 à 10, caractérisé en ce que pour obtenir des signaux de dissuasion selon une succession arbitraire, le compteur (13) progresse à la fréquence d'un générateur d'impulsions et s'arrête lors de la mise hors circuit de l'horloge (12).

12. Dispositif selon une des revendications 8 à 11, caractérisé en ce que l'intervalle de temps entre deux signaux successifs est susceptible d'être fixé par la commande séquentielle.

Fig.1

Fig. 2

EP 0 211 911 B1

Fig. 3

EP 0 211 911 B1

Fig. 7

+U

0

2
1
0

sig

16

15

16

17

18

13